# EUROPEAN PATENT APPLICATION

(11) **EP 0 878 451 A1**
(43) Date of publication of application: **18.11.1998**
(21) Application number: 98108732.3
(22) Date of filing: 13.05.1998
(51) Int. Cl.: C03C 3/06, C03B 19/14, C03C 4/00

(54) **Synthetic silica glass optical member and method of manufacturing the same**

(30) Priority: 14.05.1997 JP 124529/97; 14.05.1997 JP 124530/97
(71) Applicant: NIKON CORPORATION, Tokyo (JP)
(72) Inventor: Fujiwara, Seishi, c/o Nikon Corporation, Chiyoda-ku, Tokyo (JP); Nakagawa, Kazuhiro, c/o Nikon Corporation, Chiyoda-ku, Tokyo (JP); Jinbo, Hiroki, c/o Nikon Corporation, Chiyoda-ku, Tokyo (JP); Komine, Norio, c/o Nikon Corporation, Chiyoda-ku, Tokyo (JP)
(74) Representative: Viering, Jentschura & Partner

(57) **Abstract**

A method is provided for manufacturing a synthetic silica glass. The method includes the steps of emitting an oxygen containing gas and a hydrogen containing gas from a burner (21); emitting a mixture of an organic silicon compound and a halogen compound from the burner (21); and reacting the mixture with the oxygen containing gas and the hydrogen containing gas to synthesize the silica glass.

The synthetic silica glass produced by the method has a sodium concentration of less than 10ppb and a carbon concentration of less than 10ppm. Fluorine may be present up to 100ppm. The concentration of hydrogen molecules is between 1x10¹⁸ and 5x10¹⁸ molecules/cm³; the OH group concentration being about 900 to 1100ppm. An additional heat treatment of about 10 hours at 800 to 1100°C may be included and reduces the hydrogen molecule concentration to the range of 2x10¹⁷ to 4x10¹⁸ molecules/cm³. The synthetic silica glass manufactured is for use as an optical member, e.g. stepper lens, which is subjected to ultra-violet laser beams in use.

## Description

This application claims the benefit of Japanese Applications No 09-124529, filed in Japan on May 14, 1997, and No. 09-124530, filed in Japan on May 14, 1997, both of which are hereby incorporated by reference.

### BACKGROUND OF THE INVENTION

### Field of the Invention

The present invention relates to a method of manufacturing silica glass, and more particularly, to synthetic silica glass suited to optical members for use with ultra-violet lasers and a method of manufacturing the same.

### Discussion of the Related Art

An exposure apparatus called "stepper" has been used in conventional photolithography process for projecting and exposing fine patterns of integrated circuits onto a silicon wafer or the like. In response to a recent demand towards higher integration of LSI chips, the wavelength of the light source used in such an exposure apparatus has been reduced from the *g*-line (436 nm) to the *i*-line (365 nm), and further, to KrF excimer lasers (248 nm) and to ArF excimer lasers (193 mm).

In general, conventional optical glass used for illumination optical systems and projection optical systems of the stepper has a relatively low transmissivity with respect to the *i*-line and to light with a shorter wavelength. To alleviate this problem, the use of synthetic silica glass or single crystal fluorine compounds, such as CaF₂, has been proposed. Since multiple lenses are typically combined in the optical system of the stepper, even if the decrease in the transmissivity in each lens is small, the cumulative effect of the transmission loss in the multiple lenses may result in insufficient luminance on a wafer illuminated by the optical system. Therefore, the lens material needs to have an even higher transmissivity than that which would be suitable for a system employing a single lens. Also, as the wavelength of light becomes shorter, even a small fluctuation in refractive index within a lens may degrade the image-focusing characteristics of the lens. Accordingly, both high transmissivity and high homogeneity in refractive index are required for silica glass to be used as optical elements for ultraviolet lithography.

Commercially available synthetic silica glass, however, does not satisfy such stringent requirements, particularly with regards to the homogeneity and the durability against ultra-violet rays, and therefore cannot be used in the precision optical instruments described above. In an attempt to improve the characteristics of silica glass, thermal treatments in a pressurized hydrogen gas for improving the durability against ultra-violet rays and secondary treatments for improving the homogeneity of the refractive index and have been attempted. Generally these attempts are characterized as secondary treatments for improving the optical characteristics, as they are performed after the silica glass has been synthesized.

When silica glass is irradiated with ultra-violet rays, an optical absorption band appears in the optical absorption spectrum at photon energy of 5.8 eV. This phenomenon is caused by formation of defects, called "E'-centers." If chlorine exists in the silica glass as an impurity, it contributes to the formation of this 5.8 eV absorption band. Therefore, one way to prevent the reduction in transmissivity in the ultra-violet region is to minimize the amount of chlorine in the silica glass. Towards this end, organic silicon compounds have recently been used for synthesizing silica glass. This conventional technique, however, does not pay any attention to residual carbon which may be included in the resultant glass through the use of the organic silicon compounds. Moreover, the expected effect of using organic silicon compounds, *i*.*e*., the reduction of chlorine concentration in the resultant product, has yet to be proved.

Typically, the use of silicon tetrachloride (SiCl₄) in the conventional process for manufacturing synthetic silica glass yields a chlorine concentration of 30 ppm to 150 ppm in the resultant silica glass member. Accordingly, such glass members have a lower durability against ultra-violet rays than silica glass with no chlorine contamination. However, chlorine in the raw material forms chlorides with metal impurities contained in the synthesizing atmosphere, and thus removes the metal impurities from the system. This results in a high purity in glass member.

Therefore, most of the conventional silica glasses either have relatively high transmissivity but relatively low durability against ultraviolet light, or have relatively low transmissivity but relatively high durability against ultraviolet light.

The effects of hydrogen molecules in the silica glass are now described. As stated above, E'-centers, which contribute to formation of the optical absorption band at photon energy of 5.8 eV, appear when conventional silica glass is irradiated with ultra-violet rays. The presence of E'-centers results in a degradation of the silica glass' ability to transmit ultraviolet light. If hydrogen molecules exist in the glass, they act to terminate the E'-centers, thereby drastically reducing the ultraviolet light transmission degradation. Thus, hydrogen molecules in the silica glass significantly improves the durability against ultra-violet rays.

To introduce hydrogen molecules into silica glass using conventional processes, an extra heat treatment needs to be performed after the silica glass is manufactured. Thus, a total of at least two heat treatments needs to be carried out during the entire manufacturing process. This causes various problems, such as lower productivity, higher costs of the resultant products, etc. Furthermore, additional optical absorption bands and/or emission bands may appear due to impurity contamination and/or exposure to reducing atmospheres (deoxidizing atmospheres) during such pressurized heat treatments at high temperatures.

A recent trend in photolithography technology towards increasing lens diameters has led to the manufacture of larger optical members. Introduction of hydrogen molecules uniformly throughout large silica glass optical members using the above-mentioned secondary treatment requires longer processing time, as can be seen from the diffusion constant of hydrogen molecules in silica glass. Furthermore, when the silica glass is used for ultraviolet photolithography, the center area of the lens receives a higher energy density than its periphery, resulting in a lower concentration of hydrogen molecules at the center as compared with the periphery.

### SUMMARY OF THE INVENTION

Accordingly, the present invention is directed to a synthetic silica glass and its manufacturing method that substantially obviate the problems due to limitations and disadvantages of the related art.

An object of the present invention is to provide a synthetic silica glass having excellent optical homogeneity, high transmissivity, and high durability against ultraviolet light, whereby transmissivity degradation caused by ultraviolet irradiation is effectively suppressed, and a manufacturing method for such silica glasses.

Additional features and advantages of the invention will be set forth in the description that follows, and in part will be apparent from the description, or may be learned by practice of the invention. The objectives and other advantages of the invention will be realized and attained by the features particularly pointed out in the written description and claims hereof as well as the appended drawings.

To achieve these and other advantages and in accordance with the purpose of the present invention, as embodied and broadly described, the present invention provides a method of manufacturing synthetic silica glass, the method including the steps of emitting an oxygen containing gas and a hydrogen containing gas from a burner; emitting a mixture of an organic silicon compound and a halogen compound from the burner; and reacting the mixture with the oxygen containing gas and the hydrogen containing gas to synthesize the silica glass.

In another aspect, the present invention provides a method of manufacturing silica glass using a burner, the method including the steps of emitting a silicon compound gas and a carrier gas from a first nozzle disposed adjacent a center portion of the burner; emitting an oxygen (or hydrogen) containing gas from a second nozzle disposed at the periphery of the first nozzle, the second nozzle having an annular shape coaxial with the first nozzle; emitting a hydrogen (or oxygen) containing gas from a third nozzle disposed at the periphery of the second nozzle, the third nozzle having an annular shape coaxial with the second nozzle; emitting a hydrogen containing gas from a fourth nozzle disposed at the periphery of the third nozzle, the fourth nozzle having an annular shape coaxial with the third nozzle; emitting an oxygen containing gas from a plurality of fifth nozzles disposed between the outer circumference of the third nozzle and the inner circumference of the fourth nozzle; emitting a hydrogen containing gas form a sixth nozzle disposed at the periphery of the fourth nozzle, the sixth nozzle having an annular shape coaxial with the fourth nozzle; emitting an oxygen containing gas from a plurality of seventh nozzles disposed between the outer circumference of the fourth nozzle and the inner circumference of the sixth nozzle; and reacting the silicon compound gas with the oxygen containing gases and the hydrogen containing gases emitted above to synthesize the silica glass.

In a further aspect, the present invention provides a burner for use in synthesizing silica glass, including a first nozzle disposed adjacent a center portion of the burner for emitting a silicon compound gas and a carrier gas; a second nozzle disposed at the periphery of the first nozzle and having an annular shape coaxial with the first nozzle for emitting a combustion gas; a third nozzle disposed at the periphery of the second nozzle and having an annular shape coaxial with the second nozzle for emitting a combustion gas; a fourth nozzle disposed at the periphery of the third nozzle and having an annular shape coaxial with the third nozzle for emitting a combustion gas; a plurality of fifth nozzles disposed between the outer circumference of the third nozzle and the inner circumference of the fourth nozzle for emitting a combustion gas; a sixth nozzle disposed at the periphery of the fourth nozzle and having an annular shape coaxial with the fourth nozzle for emitting a combustion gas; and a plurality of seventh nozzles disposed between the outer circumference of the fourth nozzle and the inner circumference of the sixth nozzle for emitting a combustion gas.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a cross-sectional view of a burner according to a preferred embodiment of the present invention;
FIG. 2 is a schematic view of a silica glass synthesis apparatus used to manufacture various preferred embodiments of the present invention;
FIG. 3 is a graph showing a correlation between the flow speed in the sixth pipe of the banner and the measured concentration of the OH group in silica glass samples manufactured according to preferred embodiments of the present invention; and
FIG. 4 is a graph showing a correlation between the concentration of the OH group and the measured concentration of hydrogen molecules in silica glass samples manufactured according to preferred embodiments of the present invention.

### DETAILED DESCRIPTION OF INVENTION AND PREFERRED EMBODIMENTS

As a result of diligent research towards developing a new method for removing chlorine from silica glass to maintain high transmissivity, the present inventors have discovered that use of a mixture of an organic silicon compound and a halogen compound (or silicon halogen compound), preferably fluorine compound, as a raw material can significantly improve both transmissivity and durability of the resulting silica glass. Moreover, it was discovered that impurities, including but not limited to, chlorine, sodium, and carbon, may be removed by using a molar fraction mixing ratio of the organic silicon compound and the halogen compound (or silicon halogen compound) of 95:5 to about 85:15.

Moreover, further studies by the present inventors have revealed that by adjusting the flow speed of the hydrogen gas injected through outer nozzles of the burner, it is possible to introduce hydrogen molecules and an OH group (both are effective for improving the durability against ultraviolet light) into the silica glass in a controlled manner.

Accordingly, the present invention provides a method of manufacturing synthetic silica glass. The method includes the steps of emitting an oxygen containing gas and a hydrogen containing gas from a burner; emitting a mixture of an organic silicon compound and a halogen compound from the burner; and reacting the mixture with the oxygen containing gas and the hydrogen containing gas to synthesize the silica glass. This method is advantageous over the methods described above, as the hydrogen molecules are introduced during the synthesis of the glass, such that a secondary treatment is no longer necessary.

Examples of the organic silicon compounds that may be used in the mixture include, but are not limited to, alkoxysilane and siloxane. Examples of the alkoxysilane that may be used in the present invention include, but are not limited to, tetramethoxysilane and methyltrimethoxysilane. Examples of the siloxane that may be used in the present invention include, but are not limited to, hexamethyldisiloxane.

Examples of the halogen compounds that may be used in the mixture include, but are not limited to, Cl₂, F₂, and silicon halogen compounds Examples of the silicon halogen compounds that can be used in the present invention as a raw material include, but are not limited to chlorine compounds, such as SiCl₄, SiHCl₃, SiH₂Cl₂, and SiH₃Cl, and fluorine compounds, such as SiF₄ and Si₂F₆. Here, it is preferred that a molar fraction mixing ratio of the organic silicon compound and the halogen compound (or silicon halogen compound) be about 95:5 to about 85:15.

Moreover, the step of reacting may include the steps of burning the mixture with the hydrogen containing gas and the oxygen containing gas to produce soot; fusing the soot; and cooling the fused soot to produce the silica glass.

According to the present invention, it becomes possible to manufacture a synthetic silica glass having: a fluorine concentration less than about 100 ppm. Also it becomes possible to manufacture a synthetic silica glass, which has a substantially circular cross section and has a sodium concentration of less than about 10 ppb and a sodium concentration spatial fluctuation of less than about 5 ppb at least in a radial direction. A synthetic silica glass manufactured according to the present invention may also have a carbon concentration of less than about 10 ppm.

Inclusion of fluorine in the resultant silica glass bears various advantages. However, it is difficult to control the fluorine concentration in the manufacture of the silica glass using a direct method of oxy-hydrogen flame. Additionally, large amounts of fluorine may induce concentration gradients in the silica glass, which in turn result in undesirable inhomogencity in the refractive index. Therefore, inclusion of fluorine substantially equal to or less 100 ppm is preferable.

If sodium (Na) of about 10 ppb is included in the silica glass, it causes about 0.1% reduction in transmissivity with respect to ArF excimer laser beams which have a wavelength of 193 nm. Even a small spatial fluctuation in the refractive index of a silica lens negatively affects the image-focusing capacity of highly demanding apparatus such as excimer laser steppers, which require excellent transmissivity. Thus, it is preferable to control the spatial fluctuation of the Na concentration to be within about 5 ppb.

Silica glass lenses manufactured using the method of the present invention do not contain large amounts of chlorine, Na, or carbon (each of which negatively affects optical properties), such lenses are well suited for use as optical elements in ultraviolet lithography.

The subsequent descriptions deal with more details of the burner and methods of introducing hydrogen molecules into the silica glass according to the present invention.

As described above, the conventional methods of introducing hydrogen (or hydrogen molecules) require at least one extra secondary heat treatment. Such secondary heat treatment processing is often performed using a hot isostatic pressing (HIP) method or using a furnace capable of withstanding high temperature and/or high pressure atmospheres. It is during this secondary treatment that various oxygen-vacant-type defects and the contamination of impurities, such as Na, may occur. These defects and impurities cause optical absorption bands, which hinder the resulting silica glasses from use as ultraviolet-use optical members and may result in a considerable loss of the transparency depending on the processing temperatures.

On the other hand, the above-mentioned problems with defects and impurities may be rectified by the addition of hydrogen during the synthesis of the silica glass, as in the present invention. However, for silica glass members having large diameters, it is difficult to uniformly introduce hydrogen molecules into the glass through the secondary treatment. Such difficulty does not exist in the method of the present invention, since the hydrogen molecules are injected simultaneously with the synthesis of the silica glass itself. Thus, by adding the hydrogen molecules simultaneously, a high concentration of is possible irrespective of the diameter of the silica glass.

An example of a burner suited for the manufacturing method of the present invention includes a first pipe (or nozzle) disposed at the center of the burner for injecting a material, a second pipe (or nozzle) annularly disposed coaxially with the first nozzle at the periphery thereof, a third pipe (or nozzle) annularly disposed coaxially with the second nozzle at the periphery thereof, and a fourth pipe (or nozzle) annularly disposed coaxially with the third nozzle at the periphery thereof. This burner further includes a plurality of fifth pipes (or nozzles) disposed between the outer circumference of the third nozzle and the inner circumference of the forth nozzle, a sixth pipe (or nozzle) disposed coaxially with the fourth nozzle at the periphery thereof, and a plurality of seventh pipes (or nozzles) disposed between the outer circumference of the fourth nozzle and the inner circumference of the sixth nozzle.

Using such a burner, the step of emitting the mixture in the method of the present invention may include the step of emitting the mixture from the first nozzle of the burner. The step of emitting the oxygen containing gas and the hydrogen containing gas may include the steps of emitting an oxygen (or hydrogen) containing gas from the second nozzle of the burner; and emitting a hydrogen (or oxygen) containing gas from the third nozzle. The emitting step may further include the steps of emitting a hydrogen containing gas from the fourth nozzle; emitting an oxygen containing gas from the plurality of fifth nozzles; emitting a hydrogen containing gas from the sixth nozzle; and emitting an oxygen containing gas from the plurality of seventh nozzles. Here, the flow speed of the hydrogen containing gas emitted from the sixth nozzle is preferably about 4 m/s to about 7 m/s, and the flow speed of the oxygen containing gas emitted from each of the seventh nozzles preferably is substantially equal to or greater than the flow speed of the hydrogen containing gas emitted from the sixth nozzle.

Moreover, the ratio of hydrogen in the hydrogen containing gas emitted from the third nozzle to oxygen in the oxygen containing gas emitted from the second nozzle preferably is substantially equal to or greater than a theoretical ratio of hydrogen to oxygen necessary for combustion. Also, the ratio of hydrogen in the hydrogen containing gas emitted from the fourth nozzle to oxygen in the oxygen containing gas emitted from the fifth nozzles preferably is substantially equal to or greater than the theoretical ratio of hydrogen to oxygen necessary for combustion.

Furthermore, the ratio of hydrogen in the hydrogen containing gas emitted from the sixth nozzle to oxygen in the oxygen containing gas emitted from the seventh nozzles preferably is substantially equal to or greater than the theoretical ratio of hydrogen to oxygen necessary for combustion.

According to the present invention, it becomes possible to manufacture a synthetic silica glass which has a hydrogen molecule concentration of about 1×10¹⁸ molecules/cm³ to about 5×10¹⁸ molecules/cm³ and has an OH group concentration of about 900 ppm to about 1100 ppm.

The method of the present invention may further include an additional step of heat treating the silica glass synthesized in the reacting step for about 10 hours. The heat treatment (annealing) may be carried out at a temperature of above 800°C to about 1100°C. Even after such an additional heat treatment, the synthetic silica glass manufactured by the method of the present invention can have a hydrogen molecule concentration of about 2×10¹⁷ molecules/cm³ to about 4×10¹⁸ molecules/cm³.

Special care is needed when a chlorine compound is used as the silicon halogen compound of the present invention, since chlorine degrades the anti-ultraviolet durability. Thus, the concentration of chlorine in the silica glass should be regulated to be less than about 10 ppm. Among various chlorine compounds (as the silicon halogen compound), SiCl₄ and SiHCl₃ are preferable because they are liquid and accordingly easy to handle. Alternatively, other chlorine compounds, such as Cl₂, can be introduced in the burner.

As compared to chlorine compounds, it is preferable to use fluorine compound as the silicon halogen compound. This is because fluorine has properties similar to chlorine and similarly removes impurities when introduced in the synthesizing atmosphere. Additionally, the anti-ultraviolet durability of the resultant product can be improved by appropriate inclusion of fluorine due to the stronger bond energy as compared to that of chlorine. Furthermore, by including carbon in the organic silicon compound in the form of a fluorocarbon, as opposed to carbon dioxide, undesired voids or the like, which may otherwise be generated in the resultant product, can be suppressed.

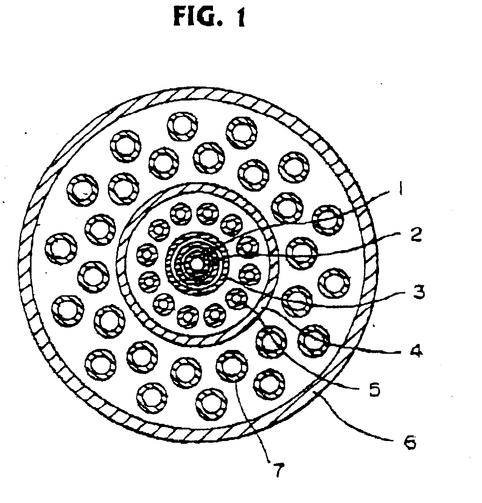

FIG. 1 is a cross-sectional view of a burner adjacent to its emission end according to a preferred embodiment of the present invention. The burner has seven sets of pipes (or nozzles), from first to seventh. The first pipe 1 (or nozzle) is annularly disposed around the center of the burner for injecting the material gas. The second pipe 2 (or nozzle) has an annular shape coaxial with the first pipe 1 and is disposed at the periphery thereof for injecting an oxygen (or hydrogen) gas. The third pipe 3 (or nozzle) has an annular shape coaxial with the second pipe 2 and is disposed at the periphery thereof for injecting a hydrogen (or oxygen) gas. The fourth pipe 4 (or nozzle) has an annular shape coaxial with the third pipe 3 and is disposed at the periphery thereof for injecting a hydrogen gas. A plurality of fifth pipes 5 (or nozzles) are disposed between the outer circumference of the third pipe 3 and the inner circumference of the forth pipe 4 for injecting an oxygen gas. The sixth pipe 6 (or nozzle) has an annular shape coaxial with the fourth pipe 4 and is disposed at the periphery thereof for injecting a hydrogen gas. Finally, a plurality of seventh pipes 7 (or nozzles) are disposed between the outer circumference of the fourth pipe 4 and the inner circumference of the sixth pipe 6 for injecting an oxygen gas. The burner is made of silica glass and is capable of controlling the flow rate (and speed) in each pipe independently. This control may be performed using a mass-flow controller, for example.

In the first pipe 1, an organic silicon compound, a halogen compound, and a carrier gas are provided. If the organic silicon compound is a liquid, a vaporizer is used to vaporizer the compound and the resultant vapor is provided to the burner together with the carrier gas. The gaseous halogen compound, such as silicon tetrafluoride, undergoes a baking process and is sent to a mass-flow controller together with a carrier gas. These compounds are mixed and emitted through the first pipe 1 positioned at the center of the burner. Examples of the carrier gases that can be used here include, but are not limited to, combustion gases, such as oxygen and hydrogen, and inert gases, such as nitrogen and helium.

For the second to seventh pipes, combustion gases are injected. Examples of such combustion gases include a hydrogen gas and an oxygen gas. Here, the "hydrogen gas" represents a hydrogen containing gas, and the "oxygen gas" represents an oxygen containing gas.

When the silicon compound injected with the carrier gas is hydrolyzed and transformed to fine particles, a certain amount of hydrogen is included in the course of forming the glass. Therefore, if excess hydrogen exists near the center of the burner, the possibility of including hydrogen molecules into the silica glass increases, and accordingly the concentration of hydrogen molecules in the resulting glass increases.

If the flow speed of the oxygen gas emitted from the corresponding outer-most pipe is adjusted to be larger than that of the hydrogen gas, the reaction of hydrogen and oxygen can be performed away from the tip of the burner. Accordingly, in addition to hydrogen, the concentration of the OH group in the resultant silica glass can be increased up to the level where significant anti-ultraviolet characteristics (durability) emerge.

As described above, the method of manufacturing the silica glass according to the present invention need not have post-synthesis secondary treatments which may deteriorate optical characteristics of the resultant glass. Thus, the silica glass manufactured by the method of present invention is suitable for optical elements for use in ultraviolet lithography.

In some cases, additional heat treatments may be necessary for adjusting homogeneity and/or for removing birefringence. However, such heat treatments may reduce the concentration of hydrogen molecules in the silica glass member due to diffusion effects occurring during the heat treatments, and may result in lowering the anti-ultraviolet durability. Nonetheless, if a large among of hydrogen molecules is initially included in the silica glass using the method of the present invention, sufficient anti-ultraviolet characteristics are obtained in the silica glasses which have been subject to the heat treatment. It is preferred that the final concentration of hydrogen molecules ranges from about 2×10¹⁷ molecules/cm³ to about 4×10¹⁸ molecules/cm³ after such heat treatment(s).

### Examples 1-1 to 1-6, 2-1 to 2-4, 3-1 to 3-3, and 4-1

Various examples of the silica glass of the present invention were manufactured. The silica glasses were evaluated in terms of their respective impurity concentrations. Specifically, the fluorine concentrations and carbon concentrations were measured by ion-chromatography using a combustion method. The Na concentrations were measured by activation analysis.

High-purity silica glass ingots were manufactured using a silica glass burner having a five-layered-pipe structure. Hydrogen gas and oxygen gas were emitted from the burner at the respective flow rates and flow speeds shown in Table 1 below and were reacted. Material gases (organic silicon compound and halogen compound) were diluted by a carrier gas and were emitted through the center of the burner together with the carrier gas. This method is generally categorized as the "oxy-hydrogen flame hydrolysis method."

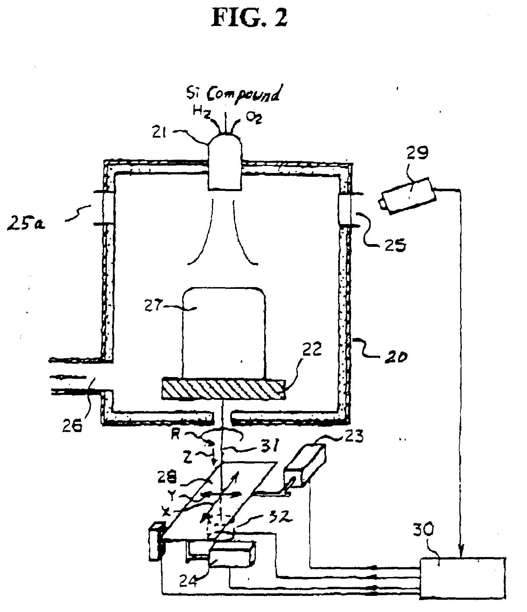

FIG. 2 is a cross-sectional view of an apparatus used to manufacture the synthetic silica glass samples. Burner 21 is made of silica glass and has an multi-pipe (multi-nozzle) structure (five sets of nozzles in this case). The burner 21 is installed at the top of furnace 20 with its emission end facing towards a target 22. The furnace 20 has its inner surfaces made of flame resistant material and is equipped with an observation-use window 25a, an inspection-use window 25 for an infrared (IR) camera 29, and an exhaust system 26. The target 22, which is an opaque glass plate, is installed at the bottom part of the furnace 20 for supporting ingot 27. The target 22 is connected to XY stage 28 installed outside of the furnace 20 through a support shaft 31 which is rotatable through a motor 32. The XY stage 28 is movable in a two-dimensional plane along the X and Y directions through X-axis servo motor 23 and Y-axis servo motor 24, respectively. The motor 32, X-axis servo motor 23, and Y-axis servo motor 24 are controlled by computer 30.

Hydrogen gas and oxygen gas were emitted from the burner 21 and mixed to form flame. Raw materials (silicon compounds in this case) were diluted with a carrier gas and injected from the center portion of the burner 21 into this flame. Then, the raw materials were hydrolyzed to produce fine particles (soot). The fine particles thus produced were deposited onto the target 22, which is rotating and moving laterally, fused, and were transformed to a glass state into form transparent silica glass ingot 27. During the process, the upper part of the ingot 27 was covered by the flame. The synthesizing surface defined near this flame was maintained to be remote from the burner 21 by a fixed distance, by gradually lowering the target 22 in the Z direction during the synthesis. Flow rates and raw materials used to form these ingots are shown in Table 1 below.

**Table 1**

| Sample No. | Organic silicon compound and its flow rate (g/min) | Halogen compound and its flow rate (sccm) | Gas flow rate in the second pipe (slm) | Gas flow rate in the third pipe (slm) | Gas flow rate in the fourth pipe (slm) | Gas flow rate in the fifth pipe (slm) |
|---|---|---|---|---|---|---|
| 1-1 | TMOS 10 | SiF₄ 155 | H₂ 20 | O₂ 10 | O₂ 16 | H₂ 40 |
| 1-2 | TMOS 10 | SiF₄ 45 | H₂ 20 | O₂ 10 | O₂ 16 | H₂ 40 |
| 1-3 | MTMS 10 | SiF₄ 175 | H₂ 20 | O₂ 10 | O₂ 16 | H₂ 40 |
| 1-4 | MTMS 10 | SiF₄ 50 | H₂ 20 | O₂ 10 | O₂ 16 | H₂ 40 |
| 1-5 | HMDS 10 | SiF₄ 155 | H₂ 20 | O₂ 10 | O₂ 16 | H₂ 40 |
| 1-6 | HMDS 10 | SiF₄ 175 | H₂ 20 | O₂ 10 | O₂ 16 | H₂ 40 |
| 2-1 | TMOS 10 | SiF₄ 180 | H₂ 20 | O₂ 10 | O₂ 16 | H₂ 40 |
| 2-2 | TMOS 10 | SiF₄ 20 | H₂ 20 | O₂ 10 | O₂ 16 | H₂ 40 |
| 2-3 | MTMS 10 | SiF₄ 200 | H₂ 20 | O₂ 10 | O₂ 16 | H₂ 40 |
| 2-4 | MTMS 10 | SiF₄ 35 | H₂ 20 | O₂ 10 | O₂ 16 | H₂ 40 |
| 3-1 | MTMS 10 | SiCl₄ 150 | H₂ 20 | O₂ 10 | O₂ 16 | H₂ 40 |
| 3-2 | TMOS 10 | SiCl₄ 100 | H₂ 20 | O₂ 10 | O₂ 16 | H₂ 40 |
| 3-3 | MTMS 10 | SiHCl₃ 90 | H₂ 20 | O₂ 10 | O₂ 16 | H₂ 40 |
| 4-1 | TMOS 10 | Cl₂ 100 | H₂ 20 | O₂ 10 | O₂ 16 | H₂ 40 |
| TMOS : tetramethoxysilane MTMS : methyltrimethoxysilane HMDS : hexamethyldisiloxane | | | | | | |

Using the conditions listed above, the corresponding ingots 1-1 through 4-1 were manufactured. Test pieces were cut out from the respective ingots and evaluated. Table 2 shows the evaluation results.

**Table 2**

| Sample No. | Na concentration near the center (ppb) | Na concentration near the periphery (ppb) | C concentration (ppm) | Halogen type and its concentration (ppm) |
|---|---|---|---|---|
| 1-1 | 1 | 5 | n.d. (Not detectable) | F 95 |
| 1-2 | 3 | 6 | n.d, | F 55 |
| 1-3 | 1 | 5 | n.d. | F 75 |
| 1-4 | 2 | 7 | n.d. | F 40 |
| 1-5 | 1 | 5 | n.d. | F 95 |
| 1-6 | 1 | 5 | n.d. | F 75 |
| 2-1 | 1 | 4 | n.d. | F 150 |
| 2-2 | 10 | 20 | 40 | F 20 |
| 2-3 | 2 | 4 | n.d. | F 200 |
| 2-4 | 5 | 11 | 30 | F 20 |
| 3-1 | 2 | 6 | n.d. | Cl 10 |
| 3-2 | 3 | 8 | n.d. | Cl 5 |
| 3-3 | 1 | 5 | n.d. | Cl 5 |
| 4-1 | 2 | 5 | n.d. | Cl 5 |

As shown in Table 2, samples 1-1 to 1-6 and 2-1 to 2-4, which used silicon tetrafluoride as the silicon halogen compound for their manufacturing processes, contain fluorine therein, thereby providing silica glass members having superior anti-ultraviolet characteristics. In particular, samples 1-1 to 1-6 have an Na concentration of less than 10 ppb and an F concentration of less than 100 ppm. These samples, 1-1 to 1-6, therefore possess excellent transparency for ultraviolet light and superior anti-ultraviolet characteristics.

Sample 3-1 to 3-3 and 4-1 were prepared using SiCl₄ or Cl₂ as the halogen compound, and therefore include chlorine. As shown in Table 2 above, samples 3-1 to 3-3 and 4-1 have sufficiently small chlorine contamination, and thus have superior anti-ultraviolet characteristics.

### Examples 5-1 to 5-5, 6-1 to 6-4, 7-1, and 7-2 (Introduction of hydrogen)

Various samples were manufactured employing the burner of FIG. 1 in the apparatus of FIG. 2. Manufacturing parameters are listed in Table 3 below. The resulting samples were evaluated in terms of the concentration of the OH group and the concentration of hydrogen molecules. The OH group concentrations were detected through infrared absorption at 2.7 µm. The hydrogen molecule concentrations were detected using Raman spectroscopy according to the technique disclosed in V. S. Khotimchernko et al., Zhurnal Prikladnoi Spektroskopii, Vol.46, No 6, pp. 987-991, June, 1987.

High-purity silica glass ingots were manufactured using a silica glass burner having the multi-pipe structure of FIG. 1. Hydrogen gas and oxygen gas were emitted from the burner 21 of the furnace 20 at the respective flow rates and flow-speeds shown in Table 3 below and burned. High purity silicon tetrachloride (for samples 5-1 to 5-5 and 6-1 to 6-4) or a mixture of an organic silicon compound and a silicon halogen compound (for samples 7-1 and 7-2) was diluted by a carrier gas and emitted through the center of the burner 21 together with the carrier gas. As the carrier gas, O₂ gas was used for samples 5-1 to 5-5, and N₂ gas was used for samples 7-1 and 7-2. This method is also categorized as the "oxy-hydrogen flame hydrolysis method." Other operations were similar to those used for manufacturing samples 1-1 to 4-1 above. In particular, during the synthesis, the target 22 of the opaque silica glass plate was rotated, laterally moved, and at the same time was gradually lowered to maintain a fixed positional relationship between the top of the growing ingot 27 and the burner 21.

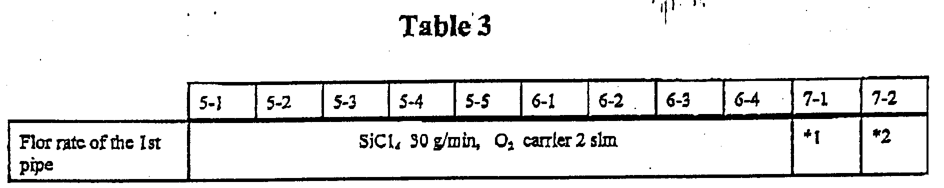

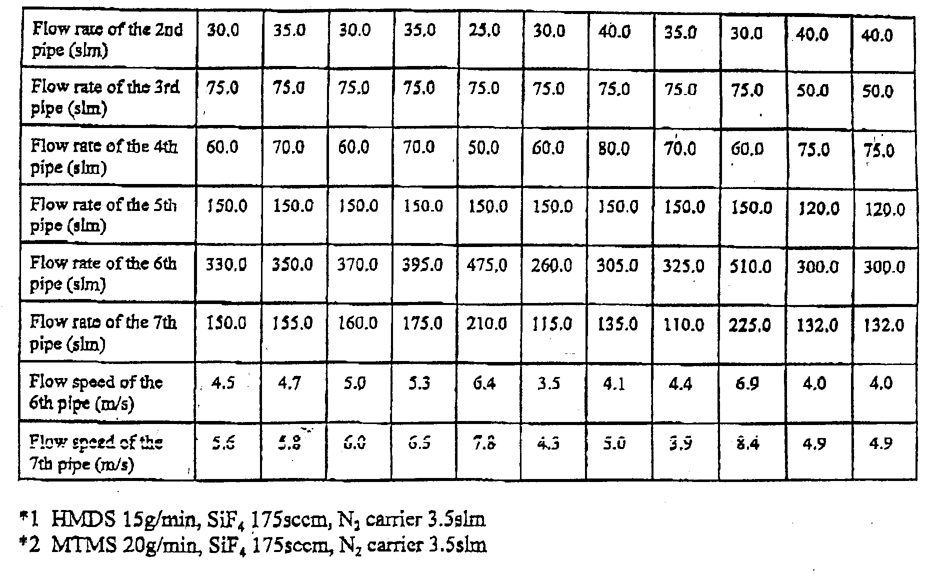

Using the conditions listed above, the corresponding ingots 5-1 through 7-2 were manufactured. Test pieces were cut out from the respective ingots and evaluated. Table 4 shows the evaluation results.

**Table 4**

| | 5-1 | 5-2 | 5-3 | 5-4 | 5-5 | 6-1 | 6-2 | 6-3 | 6-4 | 7-1 | 7-2 |
|---|---|---|---|---|---|---|---|---|---|---|---|
| OH group concentration (ppm) | 900 | 920 | 940 | 975 | 1090 | 780 | 830 | 880 | 1150 | 1050 | 1000 |
| H₂ concentration (×10¹⁸ molecules/cm³) | 3.7 | 3.5 | 3.3 | 3.0 | 1.2 | 5.7 | 4.2 | 4.0 | 0.5 | 2.4 | 3.0 |
| H₂ Concentration after heat treatment (×10¹⁸ molecules/cm³) | 1.6 | 1.2 | 1.0 | 0.7 | 0.5 | 2.8 | 2.0 | 2.0 | N.D. | 1.2 | 1.6 |

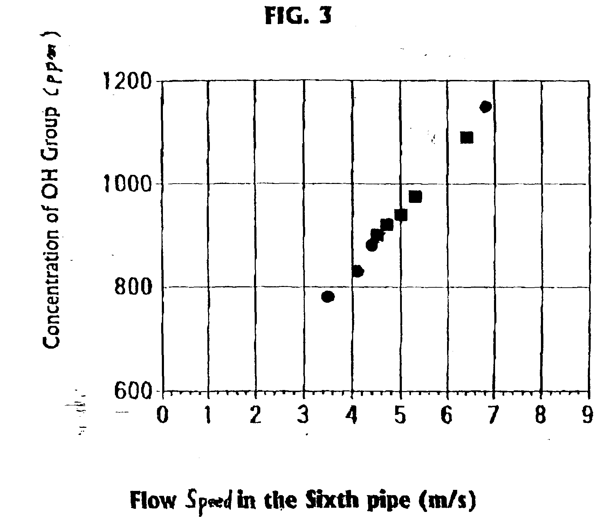

FIG. 3 is a graph showing a correlation between the OH group concentration and the flow speed in the sixth pipe, in which the corresponding data for samples 5-1 to 5-5 and 6-1 to 6-4 are plotted from Tables 3 and 4. As shown in FIG. 3, there exists a strong correlation between the flow speed and the OH group concentration; the OH group concentration substantially linearly increases with the flow speed.

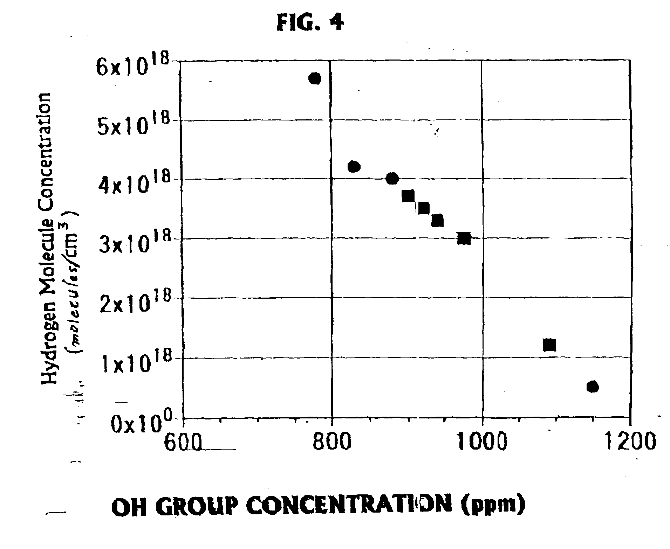

FIG. 4 is a graph showing a correlation between the OH group concentration and the hydrogen molecules concentration, in which the corresponding data for samples 5-1 to 5-5 and 6-1 to 6-4 are plotted from Table 4. The graph indicates a strong correlation between the OH group concentration and the hydrogen molecule concentration where the hydrogen molecule concentration decreases as the OH group concentration increases. In particular, it is apparent from FIG. 4 that to include sufficient amounts of both hydrogen molecules and the OH group, it is necessary to regulate the OH group concentration and the hydrogen molecules concentration within the desired ranges. This requirement is converted into a preferred range for the flow speed of the sixth pipe, as seen from FIG. 3.

These results clearly shows that the resultant silica glass members have sufficient hydrogen concentration. Thus, the use of the burner of FIG. 1 is effective for incorporating hydrogen molecules into the silica glass during synthesis of the silica glass such that the silica glass possesses superior transparency for ultraviolet light and excellent anti-ultraviolet characteristics (durability).

In particular, as shown in the examples 5-1 to 5-5 and 7-1 in Tables 3 and 4 above, when the flow speed of the hydrogen gas in the sixth pipe is set to be within the range of about 4 m/s to about 7 m/s and the flow speed of the oxygen gas in the seventh pipe is set to be larger than the flow speed of the hydrogen gas in the sixth pipe, the resultant silica glass members have even higher transparency for ultraviolet light and better anti-ultraviolet characteristics.

It will be apparent to those skilled in the art that various modifications and variations can be made in the synthetic silica glass member and the method of manufacturing the same of the present invention without departing from the spirit or scope of the invention. Thus, it is intended that the present invention cover the modifications and variations of this invention provided they come within the scope of the appended claims and their equivalents.

## Claims

1. A method of manufacturing synthetic silica glass, the method comprising the steps of:
emitting an oxygen containing gas and a hydrogen containing gas from a burner;
emitting a mixture of an organic silicon compound and a halogen compound from the burner; and
reacting the mixture with the oxygen containing gas and the hydrogen containing gas to synthesize the silica glass.

2. The method according to claim 1, wherein the organic silicon compound in the mixture includes siloxane,

3. The method according to claim 1, wherein the halogen compound in the mixture is a silicon halogen compound.

4. The method according to claim 1 or 3, wherein the organic silicon compound in the mixture is alkoxysilane.

5. The method according to claim 4, wherein the alkoxysilane is tetramethoxysilane.

6. The method according to claim 4, wherein the alkoxysilane is methyltrimethoxysilane.

7. The method according to claim 3, wherein the organic silicon compound in the mixture is siloxane.

8. The method according to claim 2 or 7 wherein the siloxane is hexamethyldisiloxane.

9. The method according to claim 3, wherein a mixing ratio of the organic silicon compound and the silicon halogen compound is about 95:5 to about 85:15 in molar fraction.

10. The method according to claim 3, wherein the silicon halogen compound in the mixture is a silicon fluorine compound.

11. The method according to claim 10, wherein a mixing ratio of the organic silicon compound and the silicon fluorine compound is about 95:5 to about 85:15 in molar fraction.

12. The method according to claim 10 wherein the silicon fluorine compound in the mixture is a silicon tetrafluoride.

13. A synthetic silica glass manufactured by the method of claim 10, having a fluorine concentration less than about 100 ppm.

14. The method according to claim 1, wherein the step of reacting includes the steps of:
burning the mixture with the hydrogen containing gas and the oxygen containing gas to produce soot;
fusing the soot; and
cooling the fused soot to produce the silica glass.

15. A synthetic silica glass manufactured by the method of claim 1, wherein the synthesized silica glass has a substantially circular cross section and wherein the synthetic silica glass has a sodium concentration less than about 10 ppb and a sodium concentration spatial fluctuation of less than about 5 ppb at least in a radial direction.

16. A synthetic silica glass manufactured by the method of claim 1, having a carbon concentration of less than about 10 ppm.

17. The method according to claim 1, wherein the step of emitting the mixture includes the step of emitting the mixture from a first nozzle disposed adjacent a center portion of the burner, and
wherein the step of emitting the oxygen containing gas and the hydrogen containing gas includes the steps of:
emitting an oxygen containing gas from a second nozzle disposed at the periphery of the first nozzle, the second nozzle having an annular shape coaxial with the first nozzle;
emitting a hydrogen containing gas from a third nozzle disposed at the periphery of the second nozzle, the third nozzle having an annular shape coaxial with the second nozzle;
emitting a hydrogen containing gas from a fourth nozzle disposed at the periphery of the third nozzle, the fourth nozzle having an annular shape coaxial with the third nozzle;
emitting an oxygen containing gas from a plurality of fifth nozzles disposed between the outer circumference of the third nozzle and the inner circumference of the fourth nozzle;
emitting a hydrogen containing gas from a sixth nozzle disposed at the periphery of the fourth nozzle, the sixth nozzle having an annular shape coaxial with the fourth nozzle; and
emitting an oxygen containing gas from a plurality of seventh nozzles disposed between the outer circumference of the fourth nozzle and the inner circumference of the sixth nozzle.

18. The method according to claim 17, wherein a ratio of hydrogen in the hydrogen containing gas emitted from the third nozzle to oxygen in the oxygen containing gas emitted from the second nozzle is substantially equal to or greater than a theoretical ratio of hydrogen to oxygen necessary for combustion, and wherein a ratio of hydrogen in the hydrogen containing gas emitted from the fourth nozzle to oxygen in the oxygen containing gas emitted from the fifth nozzles is substantially equal to or greater than the theoretical ratio of hydrogen to oxygen necessary for combustion.

19. The method according to claim 1, wherein the step of emitting the mixture includes the step of emitting the mixture from a first nozzle disposed adjacent a center portion of the burner, and
wherein the step of emitting the oxygen containing gas and hydrogen containing gas includes the steps of:
emitting a hydrogen containing gas from a second nozzle disposed at the periphery of the first nozzle, and second nozzle having an annular shape coaxial with the first nozzle;
emitting an oxygen containing gas from a third nozzle disposed at the periphery of the second nozzle, the third nozzle having an annular shape coaxial with the second nozzle;
emitting a hydrogen containing gas from a fourth nozzle disposed at the periphery of the third nozzle, the fourth nozzle having an annular shape coaxial with the third nozzle;
emitting an oxygen containing gas from a plurality of fifth nozzles disposed between the outer circumference of the third nozzle and the inner circumference of the fourth nozzle;
emitting a hydrogen containing gas from a sixth nozzle disposed at the periphery of the fourth nozzle, the sixth nozzle having an annular shape coaxial with the fourth nozzle; and
emitting an oxygen containing gas from a plurality of seventh nozzles disposed between the outer circumference of the fourth nozzle and the inner circumference of the sixth nozzle.

20. The method according to claim 17 or 19, wherein flow speed of the hydrogen containing gas emitted from the sixth nozzle is about 4 m/s to about 7 m/s, and the flow speed of the oxygen containing gas emitted from each of the seventh nozzles is substantially equal to or greater than the flow speed of the hydrogen containing gas emitted from the sixth nozzle.

21. The method according to claim 19, wherein a ratio of hydrogen in the hydrogen containing gas emitted from the fourth nozzle to oxygen in the oxygen containing gas emitted from the fifth nozzles is substantially equal to or greater than a theoretical ratio of hydrogen to oxygen necessary for combustion, and wherein a ratio of hydrogen in the hydrogen containing gas emitted from the sixth nozzle to oxygen in the oxygen containing gas emitted from the seventh nozzles is substantially equal to or greater than the theoretical ratio of hydrogen to oxygen necessary for combustion.

22. A synthetic silica glass manufactured by the method of claim 17 or 19 wherein the synthesized silica glass has a hydrogen molecule concentration of about 1×10¹⁸ molecules/cm³ to about 5×10¹² molecules/cm³ and has an OH group concentration of about 900 ppm to above 1100 ppm.

23. The method according to claim 17 or 19, further comprising the step of heat treating the silica glass synthesized in the reacting step for about 10 hours.

24. The method according to claim 23, wherein the heat treatment step includes heat treating the silica glass at a temperature of about 800°C to about 1100°C.

25. A synthetic silica glass manufactured by the method of claim 23, having a hydrogen molecule concentration of about 2×10¹⁷ molecules/cm³ to about 4×10¹⁸ molecules/cm³.
